# EUROPEAN PATENT SPECIFICATION

(11) **EP 4 279 856 B1**
(45) Date of publication and mention of the grant of the patent: **06.11.2024**
(21) Application number: 22461552.6
(22) Date of filing: 20.05.2022
(51) Int. Cl.: F28F 3/04

(54) **HEAT EXCHANGER CORE LAYER**
KERNSCHICHT FÜR WÄRMETAUSCHER
COUCHE DE NOYAU D'ÉCHANGEUR DE CHALEUR

(43) Date of publication of application: 22.11.2023
(73) Proprietor: Hamilton Sundstrand Corporation, Charlotte, NC 28217 (US)
(72) Inventor: MECZKOWSKI, Tomasz, 51-317 Wroclaw (PL); SIUDZINSKI, Hubert, 51-317 Wroclaw (PL)
(74) Representative: Dehns

(56) References cited:
- US-A1- 2016 178 287
- US-A1- 2017 356 696
- US-A1- 2020 137 921
- US-A1- 2022 010 981

## Description

### TECHNICAL FIELD

The present disclosure relates to a pin for a heat exchanger, a layer for a heat exchanger, a heat exchanger, and a method of making a layer for a heat exchanger.

A pin for a heat exchanger as defined in the preamble of claim 1 is illustrated on figure 3F of US2017356696A.

### BACKGROUND

Heat exchangers are used in many fields and exist in many forms. Typically, heat exchangers involve the transfer of heat between a first and a second fluid flowing in adjacent channels or layers of the heat exchanger. Many heat exchanger designs have a flowpath defined between an inlet of the heat exchanger and an outlet of the heat exchanger, and between fluid flow layers separated by plates that extend between the inlet and outlet. Heat exchange to or from a fluid flowing in the flowpath occurs primarily through the plates. It is known to provide pins or fins that extend in the flowpath, between the plates, to improve the heat transfer and create turbulence in the fluid flow. Various pin or fin shapes are known including triangular or rectangular cross-sectional shapes.

Such conventional heat exchangers have generally been considered satisfactory for their intended purpose but there is a need in the art for improved heat exchangers.

### SUMMARY

According to a first aspect, there is provided an additively manufactured pin as defined by claim 1.

Also provided is a layer for a heat exchanger as defined by claim 3.

Defining a fluid flowpath between upper and lower sheets where the fluid flows past sinusoidal shaped pins greatly increases the turbulence of the fluid flow in the flowpath. By increasing the turbulence of the fluid flow, the heat transfer of the heat exchanger layer is increased. Furthermore, sinusoidal shaped pins have an increased primary heat transfer area compared to conventional/straight pins.

The layer may comprise a plurality of such pins disposed in the flowpath, each pin connecting between the upper sheet and lower sheet and having a pin height defined between the upper and lower sheet.

At least one of the upper sheet and the lower sheet may be formed from an aluminium alloy, a titanium alloy, or an austenitic nickel-chromium-based superalloy.

According to another aspect, there is provided a heat exchanger as defined by claim 7.

The average distance between the upper and lower sheets of the first layer may be different from the average distance between the upper and lower sheets of the second layer. Put another way, the first layer may have a different average height from the second layer. The number of pins disposed in the flowpath of the first layer may be different from the number of pins disposed in the flowpath of the second layer.

A pin pattern of the pin(s) disposed in the flowpath of the first layer may be different from a pin pattern of the pin(s) disposed in the flowpath of the second layer.

According to another aspect, there is provided a method of manufacturing a layer for a heat exchanger, as defined by claim 10.

Using additive manufacturing allows pins to be created having the sinusoidal shape. The method may comprise additively manufacturing a plurality of pins on the lower sheet.

The method may comprise providing a sidewall extending between the lower sheet and the upper sheet; and optionally additively manufacturing one or more sets of turning vanes on the lower sheet at the same time as additively manufacturing the or each pin.

Additively manufacturing the sidewall may be simpler than using traditional manufacturing techniques. Turning vanes may be desirable in layers having a non-straight flow path, e.g. a U-shaped flow path, and additively manufacturing these may be simpler than using traditional (non-additive) manufacturing techniques.
In an example, the sheets may also be manufactured using additive manufacture.

Each step of additive manufacturing may be performed using a metal powder bed SLM additive manufacturing process, or other AM method.

A powder of the metal powder bed may be one of an aluminium alloy, a titanium alloy, an austenitic nickel-chromium-based superalloy, stainless steel or copper.

SLM is a relatively mature additive-manufacturing technology and typically allows recovery of unused (i.e. unmelted) powder from the finished article. The unused powder may be used in future additive-manufacturing operations and thus this method may be cost effective by minimizing wastage of (potentially expensive) metal powder.

The heat exchanger constructed in accordance with this aspect may have a compact design allowing for good heat exchange between fluids flowing in their respective pluralities of layers.

### BRIEF DESCRIPTION

Certain embodiments of the present disclosure will now be described in greater detail by way of example only and with reference to the accompanying drawings in which:
Figure 1 shows a perspective view of a heat exchanger;
Figure 2 shows a plan view of a layer within the heat exchanger;
Figure 3 shows a detailed view of pins according to the disclosure in the heat exchanger;
Figure 4A shows a single pin of the type according to the disclosure.
Figure 4B shows the pin of Fig. 4A in cross-section.
Figure 5 shows the direction of fluid flow around a pin such as shown in Fig. 4.

### DETAILED DESCRIPTION

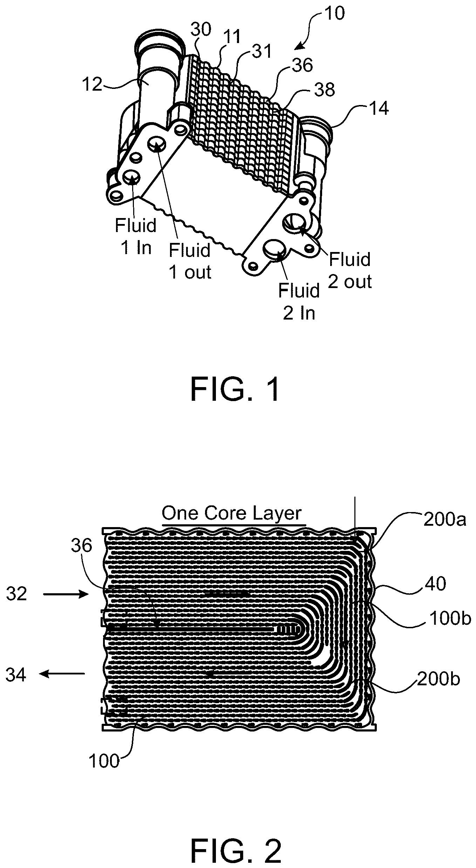

Figure 1 shows a heat exchanger 10 having a heat exchanger core 11, a first header 12 for conveying a first fluid e.g. oil into and out of the core 11, and a second header 14 for conveying a second fluid e.g. oil into and out of the core 11. The heat exchanger may be primarily used to exchange heat between the first fluid and the second fluid. However, heat may also be exchanged out through the sidewall 40 as well as out of the top and bottom sides of the heat exchanger core 11. The first and second fluids may be oil - in an oil-oil cooler (OOC), but other fluids, including water or air may also be used.

The first header 12 connects to a first plurality of layers 30 of the heat exchanger core 11. The second header 14 connects to a second plurality of layers 31 of the heat exchanger core 11. The first plurality of layers 30 is interleaved with the second plurality of layers 31 so that the first fluid flows through every second layer and the second fluid flows through the layers in-between the first fluid layers, providing alternate layers of first fluid flow and second fluid flow. Alternate layers are typically rotated by 180 degrees relative to each other. At least within the heat exchanger 10, the first fluid flowing in the first plurality of layers 30 is fluidly isolated from the second fluid flowing in the second plurality of layers by the sheets separating the layers. Fig. 2 shows one core layer. Any layer of the first and second pluralities of layers may be a layer 30 as shown in Figure 2.

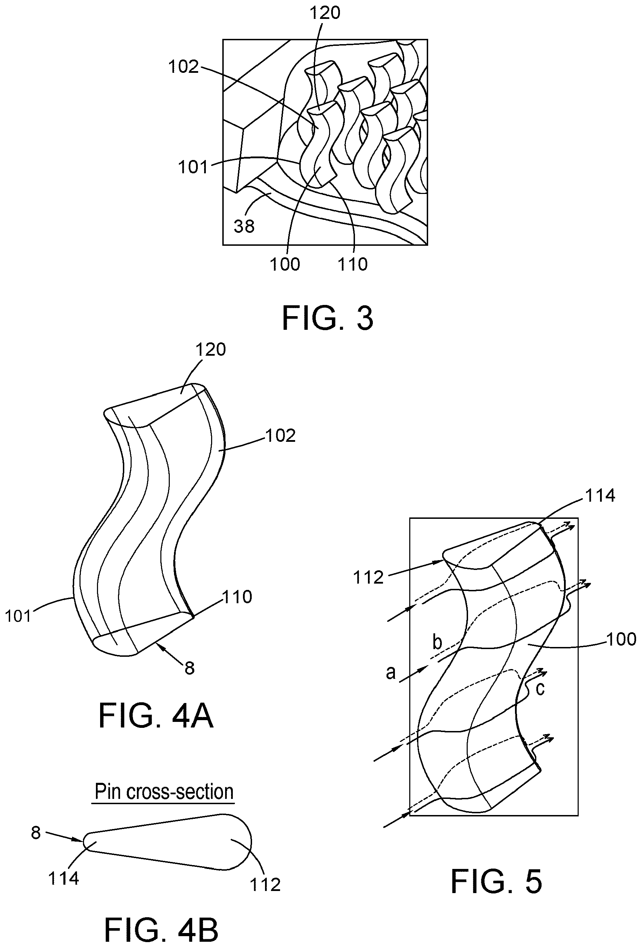

As shown in Figure 2, the layer 30 comprises an inlet 32 and an outlet 34, a sidewall and (with brief reference to Figure 3) an upper sheet, and a lower sheet 38. In use, fluid is constrained by the upper sheet, lower sheet 38, and sidewall 40, so as to flow from the inlet 32, through the layer 30, to the outlet 34. That is, the upper sheet, lower sheet 38, and sidewall 40 together define a flowpath for fluid flowing in the layer 30. The layer 30 shown in Figure 2 defines a generally U-shaped flowpath between the inlet 32 and outlet 34, with the inward flow separated from the outward flow by a separation bar 36. The upper sheet (not shown) of a given layer, may simultaneously function as the lower sheet 38 of layer (e.g. layer 30) immediately above.

With reference to Figure 1, a first portion of the first header 12 connects to the inlet side 32 of each layer 30 of the first plurality of layers, and, in use, fluid is pumped into the first portion and flows into the inlet side 32 of every layer connected to the first header 12. The fluid flows through each of the layers 30 and out through the outlet 34 of each layer of the first plurality of layers. The outlets 34 are all connected to a second portion of the first header 12, the second portion being fluidly isolated from the first portion. Fluid flows into the second portion and then out of the first header 12.

Similarly, a first portion of the second header 14 connects to the inlet side 32 of each layer 31 and, in use, fluid is pumped into the first portion and flows into the inlet side 32 of every layer connected to the second header 14. The fluid flows through each of the layers 31and out through the outlet 34 of each layer. The outlets 34 are all connected to the second portion of the second header 14, the second portion being fluidly isolated from the first portion. Fluid flows into the second portion and then out of the second header 14.

Within each layer 30, as shown in Figure 3, one or more pins 100 are disposed in the fluid flowpath. Each pin 100 extends between the lower sheet 38 and the upper sheet (not shown in Fig. 3).

Additionally, there may be provided within each layer 30 a first set of turning vanes 200a that may turn the flow through 90 degrees, and a second set of turning vanes 200b that may turn the flow through a further 90 degrees, to create the overall U-shaped flow path. A plurality of pins 100b may be disposed between the first and second sets of turning vanes 200a, b. The pins 100 shown in Figure 2 are all arranged within the layer 30 such that each pin 100 faces directly into a local flow direction.

Figure 3 shows the shape of the pins 100 in more detail. In the direction from the lower sheet to the upper sheet or vice versa, the pins have a substantially sinusoidal shape with an extruded cross-section such as shown in Fig. 4B along an extrusion sine wave path - i.e. by extruded cross-section as shown in Fig. 4B along extrusion sine wave path 101, between a first end 110 and a second end 120. The cross section of the pin 100, in the plane orthogonal to the first plane - i.e. across the ends 110, 120 may take a variety of shapes e.g. triangular, rectangular, teardrop shaped., oval, circular, etc. The ability to manufacture the pins using additive manufacturing means that there is much more flexibility in the shapes that can be produced. The cross-section in the invention as shown is a teardrop or rounded triangle shape such that the width of the pin tapers in the direction of fluid flow.

Figure 4A shows the shape of a pin 100 of a pin according to the disclosure. The pin starts at a first end 110 and then the cross section of the pin 8 (shown in Fig. 4B) follows an extrusion sine wave path 101 ending at a second end 120. The cross-sectional shape of the pin of this example is shown in Fig. 4B as a teardrop or rounded triangle shape such that the width of the pin tapers from a leading edge 112 to a trailing edge 114.

The sinusoidal shape of the pin creates turbulence in the fluid flow thus leading to improved thermal exchange. This can be seen by the arrows in Fig. 5. The fluid is directed towards the pin 100 in a first direction a. As it meets the pin at a first side 112 it is deflected around the pin in different directions b, c at different impact points along the length of the pin due to the sinusoidal shape providing turbulence to the fluid flow around the pin. The sinusoidal shape disturbs the flow of the fluid causing a permanent disturbance of the velocity field, which results in intensive mixing of the fluid particles making the fluid more turbulent. This turbulence is magnified due to the plurality of pins in the layer. The increased turbulence increases the heat transfer coefficient and, thereby, the efficiency of the heat exchanger. Further, the sinusoidal shape increases the surface area, and hence the heat transfer area, of the pin compared to conventional/straight pins.

In a heat exchanger core, as described above, several such layers will be provided, separated by the sheets. Fig. 2 shows just one such layer but the principle will be the same for each layer. When stacked, alternate layers are rotated 180 degrees relative to each other due to the counter-flow arrangement of the heat exchanger. Whilst a simple sinusoidal shape pin has been described, it is also conceivable that the pins are formed by extruded cross-section (see Fig. 4B) along the sine wave path 101. Further, it is possible that the number of pins and/or the pattern in which the pins are arranged is the same for each layer, but it is also feasible that different layers have different numbers of pins and/or patterns of pins. The layers may also be the same height (defined between the sheets) or different layers may have different heights depending on the application.

Any or all parts of the heat exchanger 10 other than the pins may be made from metal. In some embodiments, some or all parts are made from an austenitic nickel-chromium-based superalloy, such as the Inconel family of metals manufactured by the Special Metals Corporation of New York state, USA. In other embodiments, some or all parts may be made from an aluminium alloy, a titanium alloy, stainless steel or copper.

The first and second fluids may be oil, such that the heat exchanger 10 is an oil-oil heat exchanger. However, in other embodiments, the first fluid may be different from the second fluid. Other fluids, including air, water, fuel(s), or carbon dioxide are also envisaged for either or both of the first and second fluids.

## Claims

1. A pin for a core layer of a heat exchanger, the pin being an additively manufactured pin having a first end and a second end and side surfaces extending from the first to the second end between an inlet side of the pin to an outlet side of the pin, the pin being **characterized in that** it has a rounded triangular cross-section that tapers from the inlet side of the pin to the outlet side of the pin, the side surfaces forming an extruded sinusoidal shape between the first end of the pin and the second end of the pin.

2. The pin of claim 1, wherein the pin (100) defines at least one further curve between the first end of the pin and the second end of the pin.

3. A layer for a heat exchanger, the layer comprising:
an inlet (32);
an outlet (34);
an upper sheet;
a lower sheet;
a fluid flowpath defined between the upper sheet and lower sheet and from the inlet to the outlet; and
at least one pin (100) as claimed in claim 1 or 2, disposed in the flowpath and connecting the upper sheet to the lower sheet;
wherein the at least one pin (100) defines a substantially sinusoidal shape by extruded cross-section along a sine wave path (101) between the upper sheet and the lower sheet.

4. The layer of claim 3 having a plurality of said at least one pin (100).

5. The layer of claim 4, the layer defining an inflow path from the inlet, and an outflow path to the outlet, the inflow path and the outflow path being separated in the layer by a separation bar, the inflow path and the outflow path each having a plurality of said pins, the layer further comprising a plurality of turning vanes to turn the direction of flow from the inflow path by substantially 180 degrees to the outflow path.

6. The layer of claim 5, wherein the plurality of turning vanes includes a first plurality of vanes to turn the direction of flow from the inflow path by substantially 90 degrees and a second plurality of turning vanes to turn the direction of flow by a further 90 degrees to the outflow path.

7. A heat exchanger comprising a first layer and a second layer;
wherein the first layer is a layer according to any of claims 3 to 6;
wherein the second layer is a layer according to any of claims 3 to 6; and
wherein the upper sheet of the second layer is also the lower sheet of the first layer.

8. The heat exchanger according to claim 7, wherein the number of pins disposed in the flowpath of the first layer is different from the number of pins disposed in the flowpath of the second layer.

9. A method of additively manufacturing a pin for layer for a heat exchanger, the method comprising:
additively manufacturing a pin as claimed in claim 1 or 2, wherein the cross-section of the pin is extruded along a sine wave path (101) between the lower sheet and the upper sheet.

10. A method of manufacturing a layer for a heat exchanger comprising:
providing a first sheet and a second sheet, additively manufacturing at least one pin according to the method of claim 9, and locating the at least one pin between the first and the second sheet such that the first end is located at the first sheet and the second end is located at the second sheet.

11. A method of manufacturing a heat exchanger, the method comprising:
manufacturing a first plurality of layers interleaved with a second plurality of layers, wherein each layer of the first and second pluralities of layers is manufactured via the method of claim 10;
manufacturing a first header fluidly connected to each of the first plurality of layers; and
manufacturing a second header fluidly connected to each of the second plurality of layers.

12. The method according to any of claims 9 to 11, wherein each step of additive manufacturing is performed using a metal powder bed SLM process or other additive manufacturing process, wherein a powder of the metal is one of an aluminium alloy, a titanium alloy, an austenitic nickel-chromium-based superalloy, stainless steel or copper.

## Patentansprüche

1. Stift für eine Kernschicht eines Wärmetauschers, wobei der Stift ein additiv gefertigter Stift ist, der ein erstes Ende und ein zweites Ende und Seitenflächen aufweist, die sich von dem ersten zu dem zweiten Ende zwischen einer Einlassseite des Stifts zu einer Auslassseite des Stifts erstrecken, wobei der Stift **dadurch gekennzeichnet ist, dass** er
einen abgerundeten dreieckigen Querschnitt aufweist, der sich von der Einlassseite des Stifts zu der Auslassseite des Stifts verjüngt, wobei die Seitenflächen eine extrudierte sinusförmige Form zwischen dem ersten Ende des Stifts und dem zweiten Ende des Stifts bilden.

2. Stift nach Anspruch 1, wobei der Stift (100) mindestens eine weitere Kurve zwischen dem ersten Ende des Stifts und dem zweiten Ende des Stifts definiert.

3. Schicht für einen Wärmetauscher, wobei die Schicht Folgendes umfasst:
einen Einlass (32);
einen Auslass (34);
ein oberes Blech;
ein unteres Blech;
einen Fluidströmungsweg, der zwischen dem oberen Blech und dem unteren Blech und von dem Einlass zu dem Auslass definiert ist; und
mindestens einen Stift (100) gemäß Anspruch 1 oder 2, der im Strömungsweg angeordnet ist und das obere Blech mit dem unteren Blech verbindet;
wobei der mindestens eine Stift (100) eine im Wesentlichen sinusförmige Form durch einen extrudierten Querschnitt entlang eines sinusförmigen Weges (101) zwischen dem oberen Blech und dem unteren Blech definiert.

4. Schicht nach Anspruch 3, aufweisend eine Vielzahl des mindestens einen Stifts (100).

5. Schicht nach Anspruch 4, wobei die Schicht einen Zuflussweg von dem Einlass und einen Abflussweg zu dem Auslass definiert, wobei der Zuflussweg und der Abflussweg in der Schicht durch eine Trennleiste getrennt sind, wobei der Zuflussweg und der Abflussweg jeweils eine Vielzahl der Stifte aufweisen, wobei die Schicht ferner eine Vielzahl von Umlenkschaufeln umfasst, um die Strömungsrichtung von dem Zuflussweg um im Wesentlichen 180 Grad zu dem Abflussweg umzulenken.

6. Schicht nach Anspruch 5, wobei die Vielzahl von Umlenkschaufeln eine erste Vielzahl von Schaufeln beinhaltet, um die Strömungsrichtung von dem Zuflussweg um im Wesentlichen 90 Grad umzulenken, und eine zweite Vielzahl von Umlenkschaufeln, um die Strömungsrichtung um weitere 90 Grad zu dem Abflussweg umzulenken.

7. Wärmetauscher, umfassend eine erste Schicht und eine zweite Schicht;
wobei die erste Schicht eine Schicht nach einem der Ansprüche 3 bis 6 ist;
wobei die zweite Schicht eine Schicht nach einem der Ansprüche 3 bis 6 ist; und
wobei das obere Blech der zweiten Schicht zugleich das untere Blech der ersten Schicht ist.

8. Wärmetauscher nach Ansprüche 7, wobei sich die Anzahl der in dem Strömungsweg der ersten Schicht angeordneten Stifte von der Anzahl der in dem Strömungsweg der zweiten Schicht angeordneten Stifte unterscheidet.

9. Verfahren zum additiven Fertigen eines Stifts für eine Schicht für einen Wärmetauscher, wobei das Verfahren Folgendes umfasst:
Additive Fertigung eines Stifts nach Anspruch 1 oder 2, wobei der Querschnitt des Stifts entlang eines Sinuswellenpfads (101) zwischen der unteren und der oberen Platte extrudiert wird.

10. Verfahren zum Fertigen einer Schicht für einen Wärmetauscher, umfassend:
Bereitstellen eines ersten Blechs und eines zweiten Blechs, additives Fertigen mindestens eines Stifts gemäß dem Verfahren nach Anspruch 9, und Positionieren des mindestens einen Stifts zwischen dem ersten und dem zweiten Blech, so dass das erste Ende an dem ersten Blech positioniert ist und das zweite Ende an dem zweiten Blech positioniert ist.

11. Verfahren zum Fertigen eines Wärmetauscherkerns, wobei das Verfahren Folgendes umfasst:
Fertigen einer ersten Vielzahl von Schichten, die mit einer zweiten Vielzahl von Schichten verschachtelt sind, wobei jede Schicht der ersten und zweiten Vielzahl von Schichten mittels des Verfahrens nach Anspruch 10 gefertigt wird;
Fertigen eines ersten Verteilers, der mit jeder der ersten Vielzahl von Schichten fluidisch verbunden ist; und
Fertigen eines zweiten Verteilers, der mit jeder der zweiten Vielzahl von Schichten fluidisch verbunden ist.

12. Verfahren nach einem der Ansprüche 9 bis 11, wobei jeder Schritt des additiven Fertigens unter Verwendung eines Metallpulverbett-SLM-Verfahrens oder eines anderen additiven Fertigungsverfahrens durchgeführt wird, wobei ein Metallpulver eine Aluminiumlegierung, eine Titanlegierung, eine austenitische Superlegierung auf Nickel-Chrom-Basis, rostfreier Stahl oder Kupfer ist.

## Revendications

1. Broche pour une couche de noyau d'un échangeur de chaleur, la broche étant une broche fabriquée de manière additive ayant une première extrémité et une seconde extrémité et des surfaces latérales s'étendant de la première à la seconde extrémité entre un côté entrée de la broche et un côté sortie de la broche, la broche étant **caractérisée en ce qu'**elle a
une section transversale triangulaire arrondie qui se rétrécit à partir du côté entrée de la broche jusqu'au côté sortie de la broche, les surfaces latérales formant une forme sinusoïdale extrudée entre la première extrémité de la broche et la seconde extrémité de la broche.

2. Broche selon la revendication 1, dans laquelle la broche (100) définit au moins une courbe supplémentaire entre la première extrémité de la broche et la seconde extrémité de la broche.

3. Couche pour un échangeur de chaleur, la couche comprenant :
une entrée (32) ;
une sortie (34) ;
une feuille supérieure ;
une feuille inférieure ;
un chemin d'écoulement de fluide défini entre la feuille supérieure et la feuille inférieure et à partir de l'entrée jusqu'à la sortie ; et
au moins une broche (100) selon la revendication 1 ou 2, disposée dans le chemin d'écoulement et connectant la feuille supérieure à la feuille inférieure ;
dans laquelle l'au moins une broche (100) définit une forme sensiblement sinusoïdale par section transversale extrudée le long d'un chemin d'onde sinusoïdale (101) entre la feuille supérieure et la feuille inférieure.

4. Couche selon la revendication 3 ayant une pluralité de ladite au moins une broche (100).

5. Couche selon la revendication 4, la couche définissant un chemin d'écoulement d'entrée à partir de l'entrée, et un chemin d'écoulement de sortie vers la sortie, le chemin d'écoulement d'entrée et le chemin d'écoulement de sortie étant séparés dans la couche par une barre de séparation, le chemin d'écoulement d'entrée et le chemin d'écoulement de sortie ayant chacun une pluralité desdites broches, la couche comprenant également une pluralité d'aubes directrices pour faire pivoter la direction d'écoulement du chemin d'écoulement d'entrée de sensiblement 180 degrés vers le chemin d'écoulement de sortie.

6. Couche selon la revendication 5, dans laquelle la pluralité d'aubes directrices comporte une première pluralité d'aubes pour faire pivoter la direction d'écoulement à partir du chemin d'écoulement d'entrée de sensiblement 90 degrés et une seconde pluralité d'aubes directrices pour faire pivoter la direction d'écoulement de 90 degrés supplémentaires par rapport au chemin d'écoulement de sortie.

7. Échangeur de chaleur comprenant une première couche et une seconde couche ;
dans lequel la première couche est une couche selon l'une quelconque des revendications 3 à 6 ;
dans lequel la seconde couche est une couche selon l'une quelconque des revendications 3 à 6 ; et
dans lequel la feuille supérieure de la seconde couche est également la feuille inférieure de la première couche.

8. Échangeur de chaleur la revendication 7, dans lequel le nombre de broches disposées dans le chemin d'écoulement de la première couche est différent du nombre de broches disposées dans le chemin d'écoulement de la seconde couche.

9. Procédé de fabrication additive d'une broche pour couche pour un échangeur de chaleur, le procédé comprenant :
la fabrication de manière additive d'une broche selon la revendication 1 ou 2, dans lequel la section transversale de la broche est extrudée le long d'un chemin d'onde sinusoïdale (101) entre la feuille inférieure et la feuille supérieure.

10. Procédé de fabrication additive d'une couche pour un échangeur de chaleur comprenant :
la fourniture d'une première feuille et d'une seconde feuille, la fabrication de manière additive d'au moins une broche selon le procédé de la revendication 9, et le positionnement de l'au moins une broche entre la première et la seconde feuille de sorte que la première extrémité est située au niveau de la première feuille et la seconde extrémité est située au niveau de la seconde feuille.

11. Procédé de fabrication d'un échangeur de chaleur, le procédé comprenant :
la fabrication d'une première pluralité de couches entrelacées avec une seconde pluralité de couches, dans lequel chaque couche des première et seconde pluralités de couches est fabriquée via le procédé selon la revendication 10 ;
la fabrication d'un premier collecteur connecté fluidiquement à chacune de la première pluralité de couches ; et
la fabrication d'un second collecteur connecté fluidiquement à chacune de la seconde pluralité de couches.

12. Procédé selon l'une quelconque des revendications 9 à 11, dans lequel chaque étape de fabrication additive est exécutée à l'aide d'un processus SLM sur lit de poudre métallique ou d'un autre processus de fabrication additive, dans lequel une poudre du métal est l'un parmi un alliage d'aluminium, un alliage de titane, un superalliage austénitique à base de nickel-chrome, de l'acier inoxydable ou du cuivre.
